(19) Europäisches Patentamt
European Patent Office
Office européen des brevets

(11) **EP 0 587 224 B1**

(12) **EUROPEAN PATENT SPECIFICATION**

(45) Date of publication and mention
of the grant of the patent:
**29.07.1998 Bulletin 1998/31**

(51) Int Cl.⁶: **H04N 5/21**

(21) Application number: **93202534.9**

(22) Date of filing: **31.08.1993**

(54) **Extended television signal receiver**

Empfänger für erweitertes Fernsehsignal

Récepteur de signal de télévision étendu

(84) Designated Contracting States:
**BE DE ES FR GB IT NL**

(30) Priority: **07.09.1992 EP 92202693**
**26.01.1993 EP 93200212**

(43) Date of publication of application:
**16.03.1994 Bulletin 1994/11**

(73) Proprietor: **Philips Electronics N.V.**
**5621 BA Eindhoven (NL)**

(72) Inventors:
• **Hamann, Theodora Louise**
**NL-5656 AA Eindhoven (NL)**
• **van de Goor, Wilhelmus Anna**
**NL-5656 AA Eindhoven (NL)**
• **Rozendaal, Leendert Teunis**
**NL-5656 AA Eindhoven (NL)**
• **Vreeswijk, Franciscus Wilhelmus Petrus**
**NL-5656 AA Eindhoven (NL)**
• **van de Waterlaat, Adrianus Cornelis Jacobus G.**
**NL-5656 AA Eindhoven (NL)**
• **Tichelaart, Johannes Yzebrand**
**NL-5656 AA Eindhoven (NL)**
• **Poot, Teunis**
**NL-5656 AA Eindhoven (NL)**

(74) Representative:
**Steenbeek, Leonardus Johannes et al**
**INTERNATIONAAL OCTROOIBUREAU B.V.,**
**Prof. Holstlaan 6**
**5656 AA Eindhoven (NL)**

(56) References cited:
WO-A-90/09081          GB-A- 2 264 418
US-A- 5 121 211

## Description

The invention relates to a receiver for extended television signals in which a wide aspect ratio picture and at least one horizontal bar are jointly coded so as to form a standard aspect ratio picture. The horizontal bar is used to transmit "hidden" enhancement information which can be used by the extended television signal receiver to improve the vertical resolution of the wide aspect ratio television signal.

European Patent Application EP-A-0,460,750 (PHN 13,359) discloses an extended television signal receiver in which the amplitude of the enhancement information in the horizontal bars is reduced to decrease the visibility of the enhancement information and to prevent the operation of current television receivers from being disturbed by the enhancement information. However, as a consequence of its reduced amplitude, the enhancement information is more susceptible to noise. When the extended television receiver adds noisy enhancement information to the wide aspect ratio picture to improve the vertical resolution thereof, the whole wide aspect ratio picture will be disturbed by noise.

Another problem is formed by the amplitude response distortions sensitivity of the combination of the wide aspect ratio picture and the enhancement information. The baseband enhancement spectrum corresponds directly to the luminance spectrum. However, in the encoder, the modulated enhancement signal is inverse spectrum vestigial sideband (VSB-) modulated on the color subcarrier. Thus, the original baseband enhancement spectrum has been inverted. In the extended television signal receiver, the modulated enhancement frequency component $\omega_{sc}$-$\omega$ is demodulated, processed and added to frequency component $\omega$ of the luminance signal. Amplitude response distortions in the channel result in distorted mutual amplitude ratio's of corresponding luminance/enhancement frequency components.

WO-A-90/09,081 discloses a receiver-compatible enhanced definition television system (EDTV) wherein a non-compatible production video signal is separated into plural frequency groups. The components of one of the frequency groups contain NTSC compatible video information and another group contains enhancement information. A combiner embeds the enhancement information into quantized members of the one group to form a modified group. Members of the modified group are combined with non-quantized members of the one group to generate a receiver compatible signal which can be displayed on a standard receiver, or it can be decoded and displayed on a non-standard (EDTV) receiver.

It is possible for the enhancement information to become so corrupted during transmission that if it is used to generate an image on the EDTV receiver, the image will be of lower quality than the image available on an NTSC receiver. This would happen if the channel signal to noise ratio (CNR) deteriorates to a level at which the channel cannot reliably transmit the enhancement information. To prevent the resulting deterioration in the EDTV image, the EDTV receiver includes a channel quality monitor which, in effect, measures the signal to noise ratio (SNR) of the enhancement signal. If the measured SNR is less than a preselected value, the quality monitor causes the EDTV receiver to ignore the enhancement signal when synthesizing the EDTV signal. The resulting EDTV signal contains only the information transmitted by an NTSC signal.

An impulse noise eliminator compares the signal for a given pel with the average of the signals for neighboring pels. If the signal for the given pel exceeds the average of the signal for the neighboring pels by more than a preselected threshold, then the impulse noise eliminator replaces the signal for the given pel with the average of the neighboring signals.

DE-A-43.05.214, FR-A-2,690,507, GB-A-2,264,418 and IT-A-1,263,938, which count as prior art under Article 139(2) EPC for the designated contracting states DE, GB, FR and IT, respectively, disclose a television signal receiver which processes a television signal representing a letterbox image display format with a main or central image region, and a bar region containing auxiliary information to help convert from interlaced to progressive scanning. The auxiliary information is processed in a signal path including a nonlinear amplitude expander and apparatus for modifying the operation of the signal path (e.g. clipping, attenuation), as a function of the noise content of the television signal. The noise content of the transmission channel can be measured by sampling a high frequency component of the luminance signal during vertical blanking. In embodiments of the receiver, a noise dependent variable attenuator is placed before or after a compander in the auxiliary information signal path.

It is, *inter alia,* an object of the invention to provide an extended television signal receiver which is capable of enhancing the vertical resolution of the wide aspect ratio picture even in the presence of noise and/or amplitude response distortions, whereby deteriorations of the output wide aspect ratio picture quality caused by, for example, adding too much noise thereto, are avoided as much as possible. To this end, one aspect of the invention provides an extended television signal receiver as defined in the main claim. Advantageous embodiments of the invention are defined in the subclaims.

The invention is based on the recognition that, after reduction of the amount of distortions (noise and/or amplitude response distortions) in the vertical resolution enhancement signal, the vertical resolution enhancement signal can still be used to increase the vertical resolution of the wide aspect ratio picture. Of course, after the reduction of the amount of distortions, the amount of vertical resolution enhancement information might appear to be reduced as well, but this reduced amount of vertical resolution enhancement information is still capable of increasing the vertical resolution of the wide aspect ratio picture.

These and other aspects of the invention will be apparent from and elucidated with reference to the embodiments described hereinafter.

In the drawings:

Fig. 1 shows a block diagram of part of a first embodiment of an extended television signal receiver in accordance with the present invention;
Fig. 2 shows a block diagram of part of a second embodiment of an extended television signal receiver in accordance with the present invention;
Fig. 3 shows a companding curve for a noisy vertical resolution enhancement signal;
Fig. 4 shows a first preferred partial elaboration of the block diagram of Fig. 1; and
Fig. 5 shows a second preferred partial elaboration of the block diagram of Fig. 1.

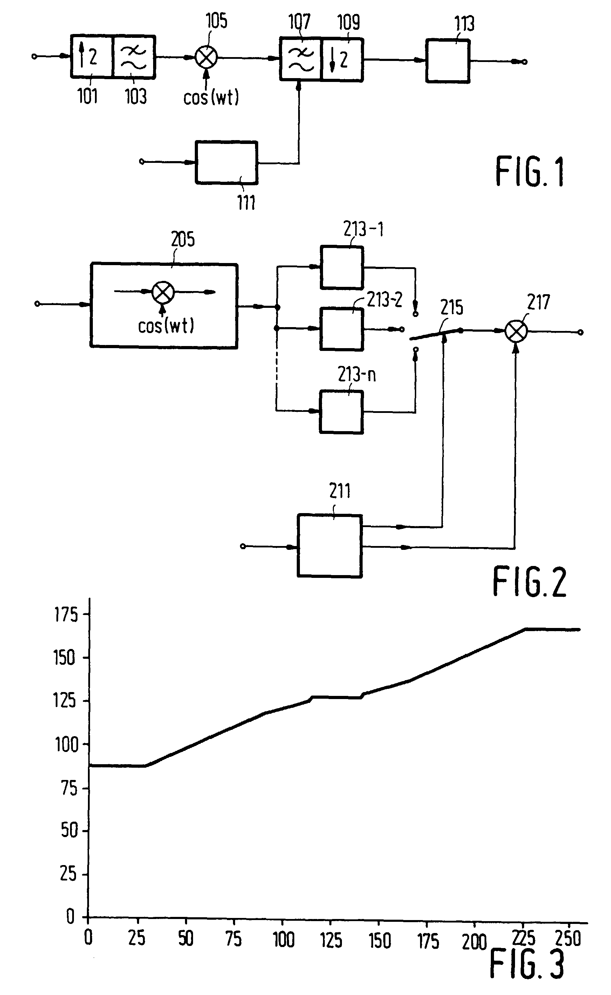

In Fig. 1, the vertical resolution enhancement signal from the horizontal bars is applied to a sample rate increase circuit 101 which is followed by a (half) Nyquist filter 103. The sampling rate is temporarily doubled to avoid fold-back components which could be very disturbing. The output of the filter 103 is applied to a demodulator 105, whose carrier signal input receives a signal at preferably the color subcarrier frequency. The output of the demodulator 105 is connected to a low-pass filter 107 preceding a sample rate decrease circuit 109 whose output is connected to a companding circuit 113 which is supposed to undo an expanding operation carried out in the encoder. The encoder (not dealt with in this application) expands the amplitude characteristic of the vertical resolution enhancement signals in such a way that small amplitudes which are more susceptible to noise are amplified, while large amplitudes are attenuated to prevent the vertical resolution enhancement signal in the horizontal bars from becoming too visible on current standard television receivers and/or disturbing the correct operation of such receivers. In the receiver, the small amplitudes are reduced and the large amplitudes are amplified to their respective original values. The output of the companding circuit 113 is coupled to a combining circuit (not shown) which combines the high-frequency information of the vertical resolution enhancement signals with the wide aspect ratio picture (having, for example, 430 lines) between the horizontal bars (having, for example, 144 lines) so as to create a screen-filling (i.e., for example, 576 lines high) wide aspect ratio picture having an enhanced vertical resolution.

In another, preferred embodiment of the extended television system, a full Nyquist filter is present in the transmitter instead of a half Nyquist filter in the transmitter and a half Nyquist filter in the receiver. If a full Nyquist filter is present in the transmitter, the transmitter further comprises a spectrum shaping filter and the receiver comprises an inverse spectrum shaping filter, for example, a 5 MHz low-pass filter, to cope with the transmission spectrum disadvantages of not having two half Nyquist filters in the transmitter and in the receiver, respectively. The inverse spectrum shaping filter function can easily be carried out by the low-pass filter 107. This yields the advantage that the receiver no longer comprises a half Nyquist filter 103, a stable implementation of which being difficult to achieve.

Moreover, the sample rate increase circuit 101 and the sample rate decrease circuit 109 can be left out if the additional complexity caused by these circuits is not deemed to be justified by their advantages. Thus, in a preferred modification of the embodiment shown in Fig. 1, only the elements 105, 107, 113 are present in addition to the element 111 to be discussed below.

The embodiment shown in Fig. 1 is characterized by a distortion measurement circuit 111 which furnishes a distortion measurement signal to control the low-pass filter 107. When the distortion measurement circuit 111 is a noise measurement circuit, it may produce the noise measurement signal on the basis of the amount of bit errors in the digital control signal which is comprised in the extended television signal (see European patent application 92.200.407.2 filed on 13.02.92, attorney's docket PHN 13,988). Alternatively, the amount of noise may be measured in other digital (audio) signals within the vertical blanking period, within the horizontal blanking period (see European patent application 91.203.289.3 filed on 13.12.91, attorney's docket PHN 13,935), in the wide aspect ratio picture, in the vertical resolution enhancement information itself, or in (test) signals with known contents in the vertical blanking interval. When the noise measurement signal indicates the presence of noise, the passband of the low-pass filter 107 is reduced so as to diminish the noisy high frequency components. This reduction may be carried out gradually or in fixed steps.

In Fig. 2, the vertical resolution enhancement signal from the horizontal bars is applied to a demodulator arrangement 205 which corresponds to the elements 101 through 109 shown in Fig. 1. The output of the demodulator arrangement 205 is applied to companding circuits 213-1, 213-2 .. 213-n, which operate in accordance with n mutually different companding curves. For example, the companding curve of companding circuit 213-1 is the inverse of the expanding curve used in the encoder, while the companding curves of the companding circuits 213-2 .. 213-n have reduced maximum amplitude differences with regard to a center digital amplitude value 128. A selector 215 selects the output of that companding circuit which has the optimum companding curve in view of the amount of noise as determined by the noise measurement circuit 211 which corresponds to noise measurement circuit 111 shown in Fig. 1. The output of the selector 215 is connected to an attenuator 217 to attenuate the vertical resolution enhancement signal in dependence on the noise measurement signal.

It will be evident that it is not necessary to have both the companding circuits 213-1 .. 231-n and the attenuator 217, while the plurality of companding circuits 213-1 .. 213-n and the selector 215 may be replaced by a single companding circuit having a noise-adaptive companding curve.

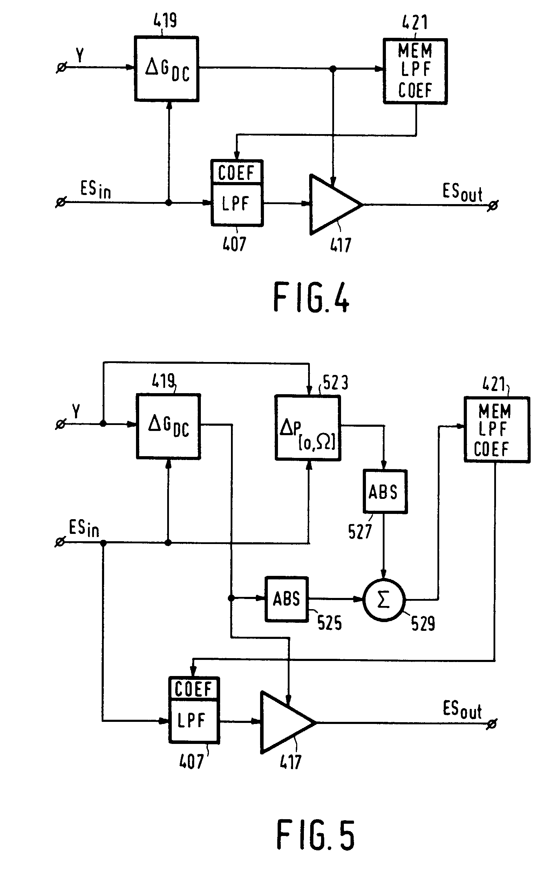

An example of such a modified companding curve is shown in Fig. 3. In this companding curve, the maximum digital amplitude difference is, for example, 40, while in the unmodified companding curve used in the companding circuit 213-1, the maximum digital amplitude difference may be, for example, 87. Small amplitudes are less amplified than in an unmodified curve so as to reduce noise in areas, while large amplitudes are less amplified than in an unmodified curve so as to decrease any possible noise peaks.

In the following, a method will be presented for automatic reduction of enhancement artifacts caused by amplitude response distortions. A preferred method for video spectrum equalization is video ghost cancellation. The state of the art is a ghost canceller that makes use of a Ghost Canceller Reference (GCR) signal as has been described in the United States Patent US-A-5,121,211 (PHA 21,667), which should be incorporated somewhere in the video signal. By means of such a GCR signal, not only amplitude response distortions but also phase distortions can be compensated for. However, such a ghost cancellation system is still rather costly.

The method introduced hereinafter, is based on letting the bandwidth of the enhancement signal depend on the difference in gain and/or power of corresponding frequency components and/or frequency bands of the baseband (demodulated) enhancement signal and the luminance signal of the wide aspect ratio picture, in the frequency range of interest. For example, frequency components $(\omega_{sc}-\omega)$ and $(\omega_{sc}+\omega)$ of the modulated enhancement signal result in frequency component $\omega$ of the baseband (demodulated) enhancement signal which correspond to frequency $\omega$ of the luminance signal. (Spectral components with frequency $(\omega_{sc}+\omega)$ have only relevance, if they are located in the upper part of the Nyquist flank of the VSB- spectrum.) Frequency bands $[(\omega_{sc}-\omega_2), (\omega_{sc}-\omega_1)]$ and $[(\omega_{sc}+\omega_1), (\omega_{sc}+\omega_2)]$ of the modulated enhancement signal result in a frequency band $[\omega_1, \omega_2]$ of the baseband (demodulated) enhancement signal which corresponds to the frequency band $[\omega_1, \omega_2]$ of the luminance signal, assuming that $\omega_{sc} > \omega_2 > \omega_1 \geq 0$.

The difference in gain of baseband (demodulated) enhancement signal and corresponding luminance frequency components, can be expressed as:

$$\Delta G(\omega) = \frac{|H_{demodulated\ enhancement}(j\omega)|}{|H_{luminance}(j\omega)|}$$

where
$\omega \in [0, \Omega_{enhancement}]$, $\Omega_{enhancement} < \omega_{sc}$, with $\omega$ being

the angular frequency, and $|H_{demodulated\ enhancement}(j\omega)|$, $|H_{luminance}(j\omega)|$ are the frequency responses for the enhancement signal and the luminance signal, respectively.

For a good operation of a practical enhanced television signal receiver, a gain adjustment of the enhancement signal has to be performed. Single or multi-tone gain adjustment is possible. Although single tone gain adjustment is discussed below, an extension to multiple tones is possible.

The simplest approach is a single tone gain adjustment of the enhancement signal, as for example, is commonly used in TV receivers to adjust the color saturation. For gain adjustment between enhancement and luminance signals, the following processing has to be performed:

- The difference in enhancement/luminance gain at dc is determined by using appropriate references in the video signal. For example, for the PALplus system, there are plans to incorporate a color subcarrier burst (which forms a modulated dc baseband enhancement signal) into the second half of I,B,G/PAL CVBS line 23 and a luminance white step reference into the first half of line 623.
- The amount that this gain difference differs from 0 dB, determines the bandwidth of the LPF 107 in the enhancement signal path. The greater the difference, the less the LPF enhancement bandwidth should be. The bandwidth reduction filter operation can be implemented by a digital filter. This digital filter should be of a type that is reloadable with a new set of filter coefficients. Multiple filter coefficients sets, applying to multiple different low pass filters, should be available in memory. A table holds values that translates the gain adjust figure into the number of the appropriate set of filter coefficients. This set is transferred to the digital filter. The new low pass filter characteristic is now installed.
- Rest a gain adjustment to be applied on the low pass filtered enhancement signal.

This method lets the maximum absolute gain difference between the luminance and enhancement frequency components decrease, resulting in less enhancement artifacts. An implementation is sketched in Fig. 4. An input enhancement signal $ES_{IN}$, from the demodulator 103 (Fig. 1) and a wide aspect ratio picture luminance signal Y are applied to gain difference determining circuit 419, which determines the gain difference $\Delta G$ at DC. The input enhancement signal $ES_{IN}$ is also applied to a digital low-pass filter 407, whose coefficients are obtained from a coefficient memory 421 which is controlled by the gain difference determining circuit 419. The gain difference determining circuit 419 also controls a gain adjustment circuit 417 which receives the low-pass filtered enhancement signal and furnishes the output enhancement signal $ES_{OUT}$ which can be further processed by the companding circuit 113 (Fig. 1).

As the visibility of the enhancement artifacts increases when an increasing amount of enhancement information is added to the luminance signal, the enhancement bandwidth reduction function might be a non-symmetric function of the enhancement-luminance gain difference.

A variant of this single tone approach, is the addition of a measurement of the power difference between on the one hand, the baseband (demodulated) enhancement signal (through the enhancement signal processing path) and on the other hand, the corresponding luminance signal (via the luminance path). A reference signal that could be used for this purpose, is a GCR signal as described in US-A-5,121,211 (PHA 21,667), because it has a flat power spectral density function. The difference in dB of these two power measurements should be added to the luminance/enhancement signal gain difference in dB. The greater the absolute ratio in dB, the less enhancement bandwidth should be passed. In Fig. 5, an implementation of this method is presented. The embodiment of Fig. 5 differs from that of Fig. 4 in that the coefficient memory 421 is not only controlled by the gain difference determining circuit 419, but also by a power difference determining circuit 523 which receives the luminance signal Y and the input enhancement signal $ES_{IN}$. The power difference is determined over a frequency range $[0, \Omega]$. Output signals of the difference determining circuits 419 and 523 are summed by an adder 529 after taking the absolute values of the output signals by absolute value determining circuits 525 and 527, respectively. The adder 529 controls the coefficient memory 421.

It should be noted that the above-mentioned embodiments illustrate rather than limit the invention, and that those skilled in the art will be able to design many alternative embodiments without departing from the scope of the appended claims. For example, in an extended television system in which the vertical resolution enhancement information is divided into a low-frequency part which is modulated on a subcarrier and a high-frequency part which is not modulated, both the low-frequency and the high-frequency parts may be used to enhance the vertical resolution when only a small amount of distortions is present, while with larger amounts of distortions only the low-frequency part is used and with high amounts of distortions no enhancement is applied to the wide aspect ratio picture.

## Claims

**Claims for the following Contracting States : BE, ES, NL**

1. A receiver for extended television signals in which a wide aspect ratio picture and at least one horizontal bar are jointly coded so as to form a standard aspect ratio picture, said at least one horizontal bar conveying vertical resolution enhancement information, said extended television signal receiver comprising:

   means for modifying said vertical resolution enhancement information to reduce an amount of distortions comprised therein, said modifying means comprising means for adapting an amplitude of the vertical resolution enhancement signal in dependence on a distortion measurement signal; and
   means for combining said wide aspect ratio picture and said modified vertical resolution enhancement information to provide an enhanced wide aspect ratio picture.

2. A receiver as claimed in claim 1, wherein said adapting means comprise an amplifier controlled by said distortion measurement signal.

3. A receiver as claimed in claim 1 or 2, wherein said adapting means comprise a plurality of companding circuits coupled to receive said vertical resolution enhancement signal, and a selection circuit for selecting one of the outputs of said companding circuits in dependence on said distortion measurement signal.

4. A receiver as claimed in claim 1 or 2, wherein said modifying means comprise means for low-pass filtering said vertical resolution enhancement signal, said low-pass filtering being dependent on said distortion measurement signal.

5. A receiver as claimed in claim 1, 2, 3 or 4, wherein said distortion measurement signal depends on a bit error rate in a control signal included in said extended television signal.

6. A receiver as claimed in claim 1, 2, 3 or 4, wherein said distortion measurement signal represents an amount of amplitude response distortions, the receiver further comprising gain difference determining means coupled to receive a demodulated vertical resolution enhancement signal and a luminance signal of said wide aspect ratio picture, for determining a difference in gain between said demodulated vertical resolution enhancement signal and said luminance signal to produce said distortion measurement signal.

7. A receiver as claimed in claim 6, wherein the receiver also comprises power difference determining means coupled to receive said demodulated vertical resolution enhancement signal and said luminance signal for determining a difference in power between said demodulated vertical resolution enhancement signal and said luminance signal over a frequency range of said demodulated vertical resolution enhancement signal, and adding means coupled to receive absolute values of output signals of the gain and power difference determining means for producing said distortion measurement signal.

**Claims for the following Contracting States : DE, FR, GB, IT**

1. A receiver for extended television signals in which a wide aspect ratio picture and at least one horizontal bar are jointly coded so as to form a standard aspect ratio picture, said at least one horizontal bar conveying vertical resolution enhancement information, said extended television signal receiver comprising:

   means for modifying said vertical resolution enhancement information to reduce an amount of distortions comprised therein, said modifying means comprising means for adapting an amplitude of the vertical resolution enhancement signal in dependence on a distortion measurement signal, the adapting means comprising a plurality of companding circuits coupled to receive said vertical resolution enhancement signal, and a selection circuit for selecting one of the outputs of said companding circuits in dependence on said distortion measurement signal; and
   means for combining said wide aspect ratio picture and said modified vertical resolution enhancement information to provide an enhanced wide aspect ratio picture.

2. A receiver as claimed in claim 1, wherein said distortion measurement signal depends on a bit error rate in a control signal included in said extended television signal.

3. A receiver for extended television signals in which a wide aspect ratio picture and at least one horizontal bar are jointly coded so as to form a standard aspect ratio picture, said at least one horizontal bar conveying vertical resolution enhancement information, said extended television signal receiver comprising:

   means for modifying said vertical resolution enhancement information to reduce an amount of distortions comprised therein, said modifying means comprising means for adapting an amplitude of the vertical resolution enhancement signal and means for low-pass filtering said vertical resolution enhancement signal, said amplitude adapting means and said low-pass filtering means being dependent on a distortion measurement signal; and
means for combining said wide aspect ratio picture and said modified vertical resolution enhancement information to provide an enhanced wide aspect ratio picture.

4. A receiver for extended television signals in which a wide aspect ratio picture and at least one horizontal bar are jointly coded so as to form a standard aspect ratio picture, said at least one horizontal bar conveying vertical resolution enhancement information, said extended television signal receiver comprising:

   gain difference determining means coupled to receive a demodulated vertical resolution enhancement signal and a luminance signal of said wide aspect ratio picture, for determining a difference in gain between said demodulated vertical resolution enhancement signal and said luminance signal to produce a distortion measurement signal;
   means for modifying said vertical resolution enhancement information to reduce an amount of distortions comprised therein, said modifying means comprising means for adapting the amplitude of the vertical resolution enhancement signal in dependence on said distortion measurement signal; and
   means for combining said wide aspect ratio picture and said modified vertical resolution enhancement information to provide an enhanced wide aspect ratio picture.

5. A receiver as claimed in claim 4, wherein the receiver also comprises power difference determining means coupled to receive said demodulated vertical resolution enhancement signal and said luminance signal for determining a difference in power between said demodulated vertical resolution enhancement signal and said luminance signal over a frequency range of said demodulated vertical resolution enhancement signal, and adding means coupled to receive absolute values of output signals of the gain and power difference determining means for producing said distortion measurement signal.

**Patentansprüche**

**Patentansprüche für folgende Vertragsstaaten : BE, ES, NL**

1. Empfänger für erweiterte Fernsehsignale, wobei ein Bild mit einem großen Seitenverhältnis und wenigstens ein horizontaler Balken gemeinsam codiert werden zum Bilden eines Bildes mit einem genormten Seitenverhältnis, wobei der genannte wenigstens eine horizontale Balken Vertikalauflösungsverbesserungsinformation befördert, wobei der genannte erweiterte Fernsehsignalempfänger die nachfolgenden Elemente aufweist:

Mittel zum Modifizieren der genannten Vertikalauflösungsverbesserungsinformation zum Verringern einer Verzerrungsmenge darin, wobei die genannten Modifizierungsmittel Mittel aufweisen zum Anpassen einer Amplitude des Vertikalauflösungsverbesserungssignals in Abhängigkeit von einem Verzerrungsmeßsignal; und
Mittel zum Kombinieren des genannten Bildes mit dem großen Seitenverhältnis und der genannten modifizierten Vertikalauflösungsverbesserungsinformation zum Schaffen eines Bildes mit einem verbesserten Seitenverhältnis.

2. Empfänger nach Anspruch 1, wobei diegenannten Anpassungsmittel einen von dem genannten Verzerrungsmeßsignal gesteuerten Verstärker aufweist.

3. Empfänger nach Anspruch 1 oder 2, wobei die genannten Mittel eine Anzahl Kompandierungsschaltungen aufweisen, die das genannte Vertikalauflösungsverbesserungssignal empfangen, und eine Selektionsschaltung zum Selektieren eines der Ausgänge der Kompandierungsschaltungen in Abhängigkeit von dem genannten Verzerrungsmeßsignal.

4. Empfänger nach Anspruch 1 oder 2, wobei die genannten Modifizierungsmittel Mittel aufweisen zur Tiefpaßfilterung des genannten Vertikalauflösungsverbesserungssignals, wobei die genannte Tiefpaßfilterung abhängig ist von dem genannten Verzerrungsmeßsignal.

5. Empfänger nach Anspruch 1, 2, 3 oder 4, wobei das genannte Verzerrungsmeßsignal abhängig ist von einer Bitfehlerrate in einem Steuersignal in dem genannten erweiterten Femsehsignal.

6. Empfänger nach Anspruch 1, 2, 3 oder 4, wobei das genannte Verzerrungsmeßsignal eine Menge Amplitudenfrequenzgangverzerrungen darstellt, wobei der Empfänger weiterhin Verstärkungsdifferenzbestimmungsmittel aufweist zum Empfangen eines demodulierten Vertikalauflösungsverbesserungssignals und eines Leuchtdichtesignals des Bildes mit dem großen Seitenverhältnis, zum Bestimmen einer Differenz in der Verstärkung zwischen dem genannten demodulierten Vertikalauflösungsverbesserungssignal und dem genannten Leuchtdichtesignal zum Erzeugen des genannten Verzerrungsmeßsignals.

7. Empfänger nach Anspruch 6, wobei der Empfänger ebenfalls Leistungsdifferenzbestimmungsmittel aufweist zum Empfangen des genannten demodulierten Vertikalauflösungsverbesserungssignals und des genannten Leuchtdichtesignals zur Bestimmung einer Differenz in der Leistung zwischen dem genannten demodulierten Vertikalauflösungsverbesserungssignal und dem genannten Leuchtdichtesignal über einen Frequenzbereich des genannten demodulierten Vertikalauflösungsverbesserungssignals, und Addiermittel zum Empfangen von Absolutwerte von Ausgangssignalen der Verstärkungs- und der Leistungsdifferenzbestimmungsmittel zum Erzeugen des genannten Verzerrungsmeßsignals.

**Patentansprüche für folgende Vertragsstaaten : DE, FR, GB, IT**

1. Empfänger für erweiterte Fernsehsignale, wobei ein Bild mit einem großen Seitenverhältnis und wenigstens ein horizontaler Balken gemeinsam codiert werden zum Bilden eines Bildes mit einem genormten Seitenverhältnis, wobei der genannte wenigstens eine horizontale Balken Vertikalauflösungsverbesserungsinformation befördert, wobei der genannte erweiterte Fernsehsignalempfänger die nachfolgenden Elemente aufweist:

Mittel zum Modifizieren der genannten Vertikalauflösungsverbesserungsinformation zum Verringern einer Verzerrungsmenge darin, wobei die genannten Modifizierungsmittel Mittel aufweisen zum Anpassen einer Amplitude des Vertikalauflösungsverbesserungssignals in Abhängigkeit von einem Verzerrungsmeßsignal, wobei die Anpassungsmittel eine Anzahl Kompandierungsschaltungen aufweisen zum Empfangen des genannten Vertikalauflösungsverbesserungssignals und eine Selektionsschaltung zum Selektieren eines der Ausgänge der genannten Kompandierungsschaltungen in Abhängigkeit von dem genannten Verzerrungsmeßsignal; und
Mittel zum Kombinieren des genannten Bildes mit dem großen Seitenverhältnis mit der genannten modifizierten Vertikalauflösungsverbesserungsinformation zum Schaffen eines Bildes mit einem verbesserten Seitenverhältnis.

2. Empfänger nach Anspruch 1, das genannte Verzerrungsmeßsignal abhängig ist von einer Bitfehlerrate in einem Steuersignal in dem genannten erweiterten Femsehsignal.

3. Empfänger für erweiterte Fernsehsignale, wobei ein Bild mit einem großen Seitenverhältnis und wenigstens ein horizontaler Balken gemeinsam codiert werden zum Bilden eines Bildes mit einem genormten Seitenverhältnis, wobei der genannte wenigstens eine horizontale Balken Vertikalauflösungsverbesserungsinformation befördert, wobei der genannte erweiterte Fernsehsignalempfänger die nachfolgenden Elemente aufweist:

Mittel zum Modifizieren der genannten Vertikalauflösungsverbesserungsinformation zum Verringern einer Verzerrungsmenge darin, wobei die genannten Modifizierungsmittel Mittel aufweisen zum Anpassen einer Amplitude des Vertikalauflösungsverbesserungssignals und Mittel zur Tiefpaßfilterung des genannten Vertikalauflösungsverbesserungssignals, wobei die genannten Amplitudenanpassungsmittel und die genannten Tiefpaßfiltermittel abhängig sind von einem Verzerrungsmeßsignal, und Mittel zum Kombinieren des genannten Bildes mit einem großen Seitenverhältnis mit der genannten modifizierten Vertikalauflösungsverbesserungsinformation zum Schaffen eines Bildes mit einem verbesserten großen Seitenverhältnis.

4. Empfänger für erweiterte Femsehsignale, wobei ein Bild mit einem großen Seitenverhältnis und wenigstens ein horizontaler Balken gemeinsam codiert werden zum Bilden eines Bildes mit einem genormten Seitenverhältnis, wobei der genannte wenigstens eine horizontale Balken Vertikalauflösungsverbesserungsinformation befördert, wobei der genannte erweiterte Fernsehsignalempfänger die nachfolgenden Elemente aufweist:

Verstärkungsdifferenzbestimmungsmittel zum Empfangen eines demodulierten Vertikalauflösungsverbesserungssignals und eines Leuchtdichtesignals des genannten Bildes mit dem großen Seitenverhältnis, zum Bestimmen einer Differenz in der Verstärkung zwischen dem genannten demodulierten Vertikalauflösungsverbesserungssignal und dem genannten Leuchtdichtesignal zum Erzeugen eines Verzerrungsmeßsignals; Mittel zum Modifizieren der genannten Vertikalauflösungsverbesserungsinformation zum Verringern einer Menge Verzerrungen darin, wobei die genannten Modifizierungsmittel Mittel aufweisen zum Anpassen der Amplitude des Vertikalauflösungsverbesserungssignals in Abhängigkeit von dem genannten Verzerrungsmeßsignal; und Mittel zum Kombinieren des genannten Bildes mit dem großen Seitenverhältnis mit der genannten modifizierten Vertikalauflösungsverbesserungsinformation zum Schaffen eines Bildes mit einem verbesserten großen Seitenverhältnis.

5. Empfänger nach Anspruch 4, wobei der Empfänger ebenfalls Leistungsdifferenzbestimmungsmittel aufweist zum Empfangen des genannten demodulierten Vertikalauflösungsverbesserungssignals und des genannten Leuchtdichtesignals zur Bestimmung einer Differenz in der Leistung zwischen dem genannten demodulierten Vertikalauflösungsverbesserungssignal und dem genannten Leuchtdichtesignal über einen Frequenzbereich des genannten demodulierten Vertikalauflösungsverbesserungssignals, und Addiermittel zum Empfangen von Absolutwerten von Ausgangssignalen der Verstärkungs- und Leistungsdifferenzbestimmungsmittel zum Erzeugen des genannten Verzerrungsmeßsignals.

## Revendications

## Revendications pour les Etats contractants suivants : BE, ES, NL

1. Récepteur de signal de télévision étendu dans lequel une image de format large et au moins une bande horizontale sont codées conjointement de manière à former une image de format standard, ladite au moins une bande horizontale transportant une information d'amélioration de la résolution verticale, et ledit récepteur de signal de télévision étendu comprenant :

des moyens pour modifier l'information d'amélioration de la résolution verticale afin de réduire les distorsions qu'elle contient, lesdits moyens de modification comprenant des moyens pour adapter une amplitude du signal d'amélioration de la résolution verticale en fonction d'un signal de mesure de distorsion, et des moyens pour combiner ladite image en format large et ladite information modifiée d'amélioration de la résolution verticale afin de produire une image de format large améliorée.

2. Récepteur suivant la revendication 1, dans lequel lesdits moyens d'adaptation comprennent un amplificateur commandé par ledit signal de mesure de distorsion.

**3.** Récepteur suivant la revendication 1 ou 2, dans lequel lesdits moyens d'adaptation comprennent une pluralité de circuits de compression couplés de manière à recevoir ledit signal d'amélioration de la résolution verticale, et un circuit de sélection pour sélectionner l'une des sorties desdits circuits de compression en fonction dudit signal de mesure de distorsion.

**4.** Récepteur suivant la revendication 1 ou 2, dans lequel lesdits moyens de modification comprennent des moyens de filtrage passe-bas dudit signal d'amélioration de la résolution verticale, ledit filtrage passe-bas dépendant dudit signal de mesure de distorsion.

**5.** Récepteur suivant la revendication 1, 2, 3 ou 4, dans lequel ledit signal de mesure de distorsion dépend d'un taux d'erreur binaire du signal de commande compris dans ledit signal de télévision étendu.

**6.** Récepteur suivant la revendication 1, 2, 3 ou 4, dans lequel ledit signal de mesure de distorsion représente une quantité de distorsions de réponse en amplitude, le récepteur comprenant en outre des moyens de détermination de différence de gain couplés de manière à recevoir un signal démodulé d'amélioration de la résolution verticale et un signal de luminance de ladite image en format large, afin de déterminer une différence de gain entre ledit signal d'amélioration de la résolution verticale et ledit signal de luminance en vue de produire ledit signal de mesure de distorsion.

**7.** Récepteur suivant la revendication 6, dans lequel le récepteur comprend également des moyens de détermination de différence de puissance couplés pour recevoir ledit signal d'amélioration de la résolution verticale démodulé et ledit signal de luminance afin de déterminer une différence de puissance entre le signal d'amélioration de la résolution verticale démodulé et le signal de luminance sur une plage de fréquence dudit signal d'amélioration de la résolution verticale, et un moyen d'addition couplé de manière à recevoir les valeurs absolues des signaux de sortie du moyen de détermination de différence de gain et de puissance en vue de produire ledit signal de mesure de distorsion.

**Revendications pour les Etats contractants suivants : DE, FR, GB, IT**

**1.** Récepteur de signal de télévision étendu dans lequel une image de format large et au moins une bande horizontale sont codées conjointement de manière à former une image de format standard, ladite au moins une bande horizontale transportant une information d'amélioration de la résolution verticale, et ledit récepteur de signal de télévision étendu comprenant :

des moyens pour modifier l'information d'amélioration de la résolution verticale afin de réduire les distorsions qu'elle contient, ces moyens comprenant des moyens pour adapter une amplitude du signal d'amélioration de la résolution verticale en fonction d'un signal de mesure de distorsion, les moyens d'adaptation comprenant une pluralité de circuits de compression couplés de manière à recevoir ledit signal d'amélioration de la résolution verticale, et un circuit de sélection pour sélectionner l'une des sorties desdits circuits de compression en fonction dudit signal de mesure de distorsion, et des moyens de combinaison de ladite image en format large et de ladite information modifiée d'amélioration de la résolution verticale afin de produire une image de format large améliorée.

**2.** Récepteur suivant la revendication 1, dans lequel ledit signal de mesure de distorsion dépend d'un taux d'erreur binaire dans un signal de commande inclus dans le signal de télévision étendu.

**3.** Récepteur de signal de télévision étendu dans lequel une image de format large et au moins une bande horizontale sont codées conjointement de manière à former une image de format standard, ladite au moins une bande horizontale transportant une information modifiée d'amélioration de la résolution verticale, et ledit récepteur de signal de télévision étendu comprenant :

des moyens pour modifier l'information d'amélioration de la résolution verticale afin de réduire les distorsions qu'elle contient, lesdits moyens de modification comprenant des moyens pour adapter une amplitude du signal d'amélioration de la résolution verticale et des moyens de filtrage passe-bas dudit signal d'amélioration de la résolution verticale, moyens dépendant d'un signal de mesure de distorsion, et un moyen de combinaison de ladite image en format large et de ladite information modifiée d'amélioration de la résolution verticale afin de produire une image en format large améliorée.

**4.** Récepteur de signal de télévision étendu dans lequel une image de format large et au moins une bande horizontale sont codées conjointement de manière à former une image de format standard, ladite une bande horizontale transportant une information d'amélioration de la résolution verticale, et ledit récepteur de signal de télévision étendu comprenant :

des moyens de détermination de la différence de gain couplés de manière à recevoir un signal démodulé d'amélioration de la résolution verticale et un signal de luminance de ladite image en format large, afin de déterminer une différence de gain entre ledit signal démodulé d'amélioration de la résolution verticale et ledit signal de luminance pour produire un signal de mesure de distorsion;

un moyen de modification de ladite information d'amélioration de la résolution verticale en vue de réduire les distorsions qu'elle contient, ce moyen de modification comprenant un moyen d'adaptation de l'amplitude du signal d'amélioration de la résolution verticale en fonction dudit signal de mesure de distorsion, et

un moyen de combinaison de ladite image en format large et de ladite information d'amélioration de la résolution verticale afin de produire une image en format large améliorée.

5. Récepteur suivant la revendication 4, dans lequel le récepteur comprend également un moyen de détermination de la différence de puissance, couplé de manière à recevoir ledit signal démodulé d'amélioration de la résolution verticale et ledit signal de luminance en vue de déterminer une différence de puissance entre ledit signal démodulé d'amélioration de la résolution verticale et ledit signal de luminance sur une plage de fréquences du signal d'amélioration en résolution verticale, ainsi qu'un moyen dàddition couplé pour recevoir les valeurs absolues des signaux de sortie des moyens de détermination de différence de gain et de puissance en vue de produire ledit signal de mesure de distorsion.

FIG.1

FIG.2

FIG.3

FIG.4

FIG.5